# EUROPÄISCHE PATENTANMELDUNG

(11) **EP 0 893 644 A2**
(43) Veröffentlichungstag der Anmeldung: **27.01.1999**
(21) Anmeldenummer: 98890068.4
(22) Anmeldetag: 10.03.1998
(51) Int. Cl.: F16L 47/04

(54) **Kunststoff-Rohrleitungsteil mit mindestens einem Seitenabgang**

(30) Priorität: 25.07.1997 AT 1273/97
(71) Anmelder: Harreither Gesellschaft m.b.H, 3334 Gaflenz (AT)
(72) Erfinder: Harreither, Raimund, 3334 Gaflenz (AT)
(74) Vertreter: Kopecky, Helmut, Dipl.-Ing. Kopecky & Schwarz Patentanwälte

(57) **Zusammenfassung**

Bei einem Kunststoff-Rohrleitungsteil (1) mit mindestens einem Seitenabgang (2), der endseitig von einem metallischen Anschlußstück (6) zum Anschluß einer weiteren Rohrleitung od. dgl. gebildet ist, ist das Anschlußstück (6) in den Kunststoff-Rohrleitungsteil (1) eingegossen.

Um beim Anschluß der weiteren Rohrleitung od. dgl. den Kunststoff des Kunststoff-Rohrleitungsteils (1) nur mit geringen Kräften zu belasten, ist das Anschlußstück (6) mit einem peripher umlaufenden Stützring (14) für eine diesen übergreifende Überwurfmutter (15) versehen (Fig. 1).

## Beschreibung

Die Erfindung betrifft einen Kunststoff-Rohrleitungsteil mit mindestens einem Seitenabgang, der endseitig von einem metallischen Anschlußstück zum Anschluß einer weiteren Rohrleitung od. dgl. gebildet ist, wobei das Anschlußstück in den Kunststoff-Rohrleitungsteil eingegossen ist.

Kunststoff-Rohrleitungsteile dieser Art sind im Handel erhältlich. Bei diesen bekannten Kunststoff-Rohrleitungsteilen ist jeweils am metallischen Anschlußstück endseitig ein Außen- oder Innengewinde vorgesehen, das aus dem Kunststoff-Rohrleitungsteil herausragt und an dem eine weitere Rohrleitung od. dgl. angeschlossen werden kann, u.zw. durch Festziehen einer an der weiteren Rohrleitung angeordneten Mutter, die in das Außengewinde des Anschlußstückes eingreift. Dies ist insofern nachteilig, als es beim Festziehen der Mutter zwischen dem Gewinde der Mutter und dem Außengewinde des Anschlußstückes infolge auftretender Reibung zur Übertragung eines hohen Drehmomentes von der Mutter auf das Anschlußstück kommen kann. Hierdurch kann das in den Kunststoff-Rohrleitungsteil mit einem Ende eingegossene Anschlußstück im Kunststoff-Rohrleitungsteil gelockert werden und es können Undichtheiten auftreten. Dieser Nachteil ist besonders gravierend bei Systemen mit höheren Innendrücken.

Die Erfindung bezweckt die Vermeidung dieser Nachteile und Schwierigkeiten und stellt sich die Aufgabe, einen Kunststoff-Rohrleitungsteil der eingangs beschriebenen Art zu schaffen, der beim Herstellen einer dichten Rohrverbindung zwischen dem Kunststoff-Rohrleitungsteil und der weiteren Rohrleitung mechanisch nur sehr gering belastet wird. Es soll hierdurch eine vollkommene Dichtheit auch bei höheren Drücken sowie eine hohe Lebensdauer sichergestellt werden.

Diese Aufgabe wird erfindungsgemäß dadurch gelöst, daß das Anschlußstück mit einem peripher umlaufenden Stützring für eine diesen übergreifende Überwurfmutter zum Befestigen der weiteren Rohrleitung od. dgl. versehen ist.

Der besondere Vorteil der Erfindung ist darin zu sehen, daß das Ansatzstück nur mehr mit ganz geringen Drehmomenten beim Anschluß der weiteren Rohrleitung oder eines sonstigen Teiles belastet wird, nämlich nur mit jenem Drehmoment, das durch die Reibung zwischen der Überwurfmutter und dem Ringansatz verursacht wird. Hierdurch wird die "Gußverbindung" zwischen dem Ansatzstück und dem Kunststoff des Kunststoff-Rohrleitungsteiles nur sehr gering belastet. Damit sind eine vollkommene Dichtung auch bei höheren Drücken und eine hohe Lebensdauer sichergestellt. Das Anschlußstück kann aus Messing, wie Rohmessing, Stahl oder auch in vernickelter Stahlausführung oder Messing vernickelt oder einer sonstigen Legierung gebildet sein.

Vorzugsweise ist an dem Anschlußstück endseitig eine Aufnahme für eine Dichtung, vorzugsweise eine O-Ringdichtung, vorgesehen. Anstelle der O-Ringdichtung kann auch eine Flachdichtung vorgesehen sein. Zweckmäßig ist die O-Ringdichtung kombiniert mit einem Eurokonus.

Zweckmäßig ist das Anschlußstück an seinem in den Kunststoff-Rohrleitungsteil ragenden Ende mit einer Verdrehsicherung ausgestattet, vorzugsweise gebildet von Quernuten, die mit dem Kunststoff-Rohrleitungsteil verzahnt sind, wobei gemäß einer bevorzugten Ausführungsform die Verdrehsicherung ein größeres Drehmoment aufnehmen kann als das Innengewinde der Überwurfmutter beim Festziehen derselben. Dies hat den Vorteil, daß für den Fall, daß bei der Montage eine zu große Kraft beim Festziehen der Überwurfmutter aufgebracht wird, zunächst die Überwurfmutter einen Schaden erleidet und nicht die Verdrehsicherung, so daß der Schaden an dem sichtbaren Teil des Anschlußstückes auftritt und ein Austausch bzw. eine Reparatur sofort und noch vor Auftreten einer Leckage vorgenommen werden kann.

Der Kunststoff-Rohrleitungsteil ist nach einer bevorzugten Ausführungsform als Modul für einen Heizkreisverteiler ausgebildet. Ein erfindungsgemäßer Kunststoff-Rohrleitungsteil kann selbstverständlich auch in einem Trinkwasserverteiler eingesetzt werden. An das Anschlußstück werden bevorzugt Rohrleitungen angeschlossen. Es können jedoch auch Hähne, Meßgeräte etc. angeschlossen werden.

Der Kunststoff-Rohrleitungsteil ist vorzugsweise aus Polypropylen gefertigt. Hierdurch ist der Kunststoff-Rohrleitungsteil an einen weiteren, ebenfalls aus Polypropylen gefertigten Rohrleitungsteil durch eine Schweißverbindung in einfacher Weise anschließbar.

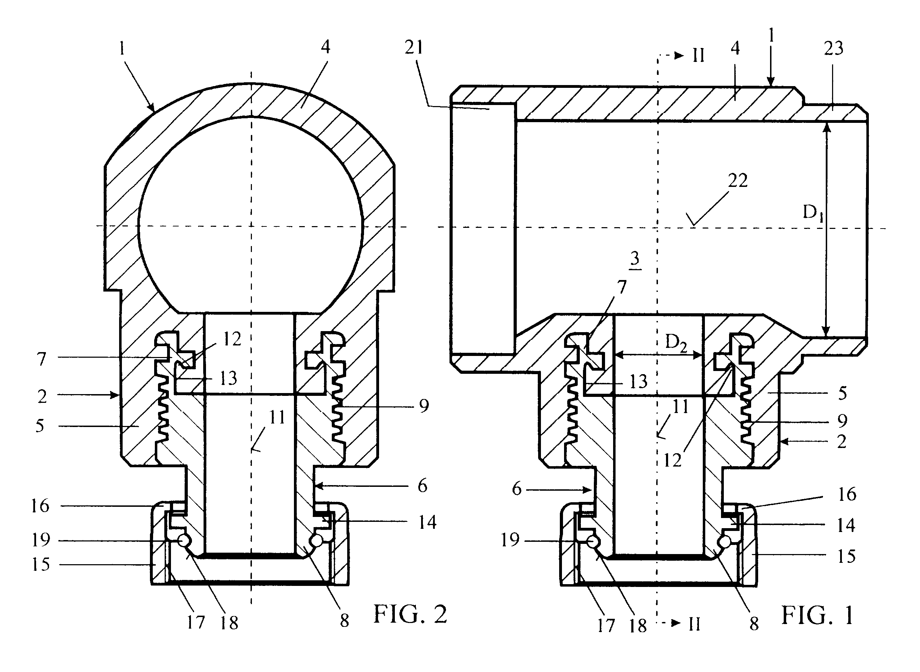

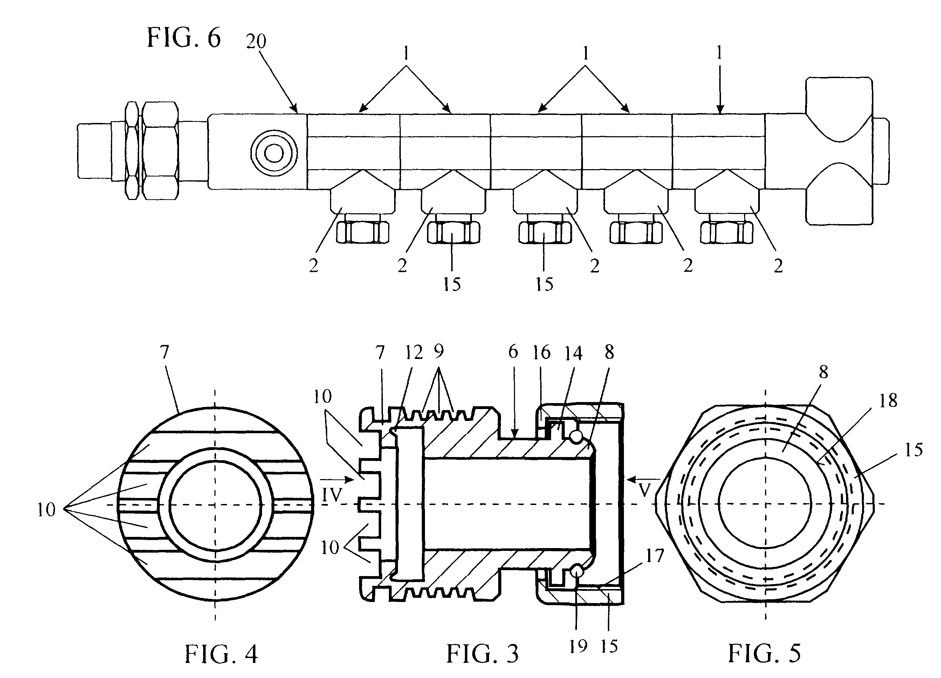

Die Erfindung ist nachfolgend anhand eines Ausführungsbeispieles näher erläutert, wobei Fig. 1 einen Längsschnitt durch einen erfindungsgemäßen Kunststoff-Rohrleitungsteil und Fig. 2 einen Querschnitt durch einen solchen Teil gemäß der Linie II-II der Fig. 1 zeigen. Fig. 3 zeigt ein erfindungsgemäß ausgebildetes metallisches Anschlußstück ebenfalls im Schnitt. Fig. 4 zeigt eine Ansicht in Richtung des Pfeiles IV der Fig. 3 und Fig. 5 eine Ansicht in Richtung des Pfeiles V der Fig. 3. Fig. 6 veranschaulicht in kleinerem Maßstab ein Einbaubeispiel des erfindungsgemäßen Kunststoff-Rohrleitungsteils, u.zw. in einem Heizkreisverteiler.

An einem Kunststoff-Rohrleitungsteil 1, der vorzugsweise aus Polypropylen gefertigt ist, ist ein Seitenabgang 2 zum Anschluß einer weiteren, nicht mehr dargestellten Rohrleitung vorgesehen. Durch den Seitenabgang 2 wird ein etwa T-förmiger Innenraum 3 gebildet, wobei der Hauptstrom der Flüssigkeit durch einen Haupt-Rohrteil 4 mit einem Durchmesser D 1 und ein Teilstrom der Flüssigkeit durch den den Seitenabgang 2 bildenden Neben-Rohrteil 5 mit einem kleineren Durchmesser D 2 abgezweigt werden kann.

Zum Anschluß einer weiteren Rohrleitung an den Seitenabgang 2 ist dieser mit einem metallischen Anschlußstück 6 versehen, das mit einem Ende 7 in den Kunststoff-Rohrleitungsteil 1 eingegossen ist, und mit seinem anderen Ende 8 aus dem Kunststoff-Rohrleitungsteil 1 herausragt. Das eingegossene Ende des Anschlußstückes 6 ist mit peripher umlaufenden Umfangsrillen 9 versehen, um einen guten Halt im Kunststoff-Rohrleitungsteil 1 zu ergeben. Stirnseitig weist das Ende 7 des Anschlußstückes Quernuten 10 auf, zwischen die die Kunststoffmasse des Kunststoff-Rohrleitungsteils 1 eindringt, wodurch eine Verdrehsicherung gegen Verdrehen um die Achse 11 des Seitenabganges 2 bzw. des Anschlußstückes 6 gebildet ist. Zur Erzielung einer guten Dichtheit ist das metallische Anschlußstück weiters mit einer eine Hinterschneidung 12 aufweisenden Nut 13, die sich innenseitig des rohrförmigen metallischen Anschlußstückes 6 befindet, versehen. Diese Nut 13 wird ebenfalls, wie aus den Fig. 1 und 2 ersichtlich ist, von der Kunststoffmasse des Kunststoff-Rohrleitungsteils 1 ausgefüllt.

Das frei vom Kunststoff-Rohrleitungsteil 1 nach außen ragende Ende 8 des Anschlußstückes 6 ist außen mit einem peripher umlaufenden Stützring 14 für eine diesen übergreifende Überwurfmutter 15 versehen. Die Überwurfmutter 15 umfaßt mit einem radial nach innen gerichteten Kragen 16 diesen Stützring 14 und stützt sich bei Anschluß einer mit einem Außengewinde versehenen weiteren Rohrleitung od. dgl. an dem Stützring 14 ab. Beim Festziehen der Überwurfmutter 15 an dem am Ende der weiteren Rohrleitung od. dgl. vorgesehenen Außengewinde werden lediglich die zwischen diesem Stützring 14 und dem radial nach innen gerichteten Kragen 16 der Überwurfmutter 15 auftretenden Reibungskräfte in das Anschlußstück 6 und über die Verdrehsicherung, d.h. die vom Kunststoff ausgefüllten Quernuten 10 des Anschlußstückes 6, in den Kunststoff-Rohrleitungsteil 1 übertragen, so daß die Verdrehsicherung nur mit geringen Kräften belastet wird.

Vorzugsweise ist die Überwurfmutter 15 weichgeglüht, was neben der Montageerleichterung der Überwurfmutter 15 den Vorteil bringt, daß die Verdrehsicherung 10 des Anschlußstückes 6 im Kunststoff-Rohrleitungsteil 1 größere Kräfte aufnehmen kann als das Innengewinde 17 der Überwurfmutter 15. Mit anderen Worten heißt dies, daß bei einem zu starken Festziehen der Überwurfmutter 15 zunächst das Innengewinde 17 der Überwurfmutter 15 beschädigt wird und die Verdrehsicherung zwischen Kunststoff-Rohrleitungsteil 1 und Anschlußstück 6 unbeschädigt bleibt. Wenn aber auch in einem solchen Fall der Kunststoff-Rohrleitungsteil 1 als Gesamtes ausgetauscht werden muß, bietet diese Konstruktion doch den Vorteil, daß eine Beschädigung von außen zu erkennen ist, was nicht der Fall wäre, wenn zunächst die Überwurfmutter 15 die Kräfte ohne Beschädigung aufnehmen kann, jedoch die Verdrehsicherung 10 zwischen dem Kunststoff-Rohrleitungsteil 1 und dem Anschlußstück 6 gelockert oder beschädigt wird. In letzterem Fall wäre nämlich eine Kontrolle bei der Montage des Kunststoff-Rohrleitungsteils 1 nicht möglich, sondern erst nach Inbetriebnahme und da erst vielleicht nach einiger Zeit, wodurch dann Reparaturen wesentlich umständlicher werden und weiters größere Schäden durch austretende Flüssigkeit auftreten könnten.

Das Ende 8 des metallischen Anschlußstückes 6 ist weiters mit einem Ansatz 18 versehen, der über den Stützring in Achsrichtung hinausragt und der zur Aufnahme einer O-Ringdichtung 19 dient. Die O-Ringdichtung ist kombiniert mit einem Eurokonus versehen. Anstelle der O-Ringdichtung 19 könnte selbstverständlich auch eine andere Art der Dichtung, wie z.B. eine Flachdichtung etc. vorgesehen sein.

Als Metall für das metallische Anschlußstück eignen sich alle in der Installationstechnik verwendbaren Metalle, wie Messing, Chrom-Messing, Stahl, vernickelter Stahl, Messinglegierungen etc.

Bei dem in der Zeichnung dargestellten Kunststoff-Rohrleitungsteil 1 handelt es sich um einen Modul für einen Heizkreisverteiler 20, der in Fig. 6 dargestellt ist. Wie aus Fig. 6 zu ersehen ist, sind mehrere solche Module 1 hintereinander angeordnet, wobei die Dichtverbindung zwischen diesen einzelnen Modulen 1 durch Polyfusionsschweißung erzielt wird. Zu diesem Zweck weisen die Module 1 jeweils eine am Haupt-Rohrteil 4 vorgesehene und in Umfangsrichtung umlaufende Ausnehmung 21 sowie am gegenüberliegenden Ende einen zu dieser Ausnehmung 21 passend dimensionierten und in Richtung der Achse 22 des Hauptrohr-Teils 4 sich erstreckenden Ansatz 23 auf.

Die Erfindung beschränkt sich jedoch nicht auf die Anwendung für solche Module 1 für Heizkreisverteiler 20, sondern sie kann auch für Trinkwasserverteiler oder sonstige beliebige Anlagen, bei denen ein Seitenabgang 2 erforderlich ist, eingesetzt werden. An den Seitenabgang 2 muß nicht unbedingt eine weitere Rohrleitung angeschlossen werden, sondern es könnten auch Meßgeräte, wie z.B. ein Druckanzeiger, oder auch Hähne etc. angeschlossen werden.

## Patentansprüche

1. Kunststoff-Rohrleitungsteil (1) mit mindestens einem Seitenabgang (2), der endseitig von einem metallischen Anschlußstück (6) zum Anschluß einer weiteren Rohrleitung od. dgl. gebildet ist, wobei das Anschlußstück (6) in den Kunststoff-Rohrleitungsteil (1) eingegossen ist, dadurch gekennzeichnet, daß das Anschlußstück (6) mit einem peripher umlaufenden Stützring (14) für eine diesen übergreifende Überwurfmutter (15) zum Befestigen der weiteren Rohrleitung od. dgl. versehen ist.

2. Kunststoff-Rohrleitungsteil (1) nach Anspruch 1, dadurch gekennzeichnet, daß an dem Anschlußstück (6) endseitig eine Aufnahme für eine Dichtung (19), vorzugsweise eine O-Ringdichtung (19), vorgesehen ist.

3. Kunststoff-Rohrleitungsteil (1) nach Anspruch 1 oder 2, dadurch gekennzeichnet, daß das Anschlußstück (6) an seinem in den Kunststoff-Rohrleitungsteil (1) ragenden Ende (7) mit einer Verdrehsicherung (10) ausgestattet ist, vorzugsweise gebildet von Quernuten (10), die mit dem Kunststoff-Rohrleitungsteil (1) verzahnt sind.

4. Kunststoff-Rohrleitungsteil (1) nach Anspruch 3, dadurch gekennzeichnet, daß die Verdrehsicherung (10) ein größeres Drehmoment aufnehmen kann als das Innengewinde (17) der Überwurfmutter (15) beim Festziehen derselben.

5. Kunststoff-Rohrleitungsteil (1) nach einem oder mehreren der Ansprüche 1 bis 4, dadurch gekennzeichnet, daß der Kunststoff-Rohrleitungsteil (1) als Modul für einen Heizkreisverteiler (20) ausgebildet ist.
